# EUROPÄISCHE PATENTSCHRIFT

(11) **EP 2 768 642 B1**
(45) Veröffentlichungstag und Bekanntmachung des Hinweises auf die Patenterteilung: **04.05.2016**
(21) Anmeldenummer: 11779725.8
(22) Anmeldetag: 11.11.2011
(51) Int. Cl.: A23G 4/02, B26D 7/32, B65G 15/58

(54) **VERFAHREN UND VORRICHTUNG ZUM SEPARIEREN VON PLATTENFÖRMIGEN GEGENSTÄNDEN IN STREIFENFÖRMIGE ODER PLATTENFÖRMIGE GEGENSTANDSUNTEREINHEITEN**
METHOD AND DEVICE FOR SEPARATING SLAB-SHAPED ARTICLES INTO SUB-UNITS OF ARTICLES IN STRIP OR SLAB FORM
PROCÉDÉ ET DISPOSITIF DE SÉPARATION D'OBJETS EN FORME DE PLAQUE DANS DES SOUS-UNITÉS D'OBJETS EN FORME DE BANDE OU EN FORME DE PLAQUE

(43) Veröffentlichungstag der Anmeldung: 27.08.2014
(73) Patentinhaber: Loesch Verpackungstechnik GmbH, 96146 Altendorf (DE)
(72) Erfinder: HAMMACHER, Heinz-Peter, 96049 Bamberg (DE)
(74) Vertreter: Prüfer & Partner mbB Patentanwälte · Rechtsanwälte
(86) Internationale Anmeldenummer: PCT/EP2011/069971
(87) Internationale Veröffentlichungsnummer: WO 2013/068050

(56) Entgegenhaltungen:
- EP-A1- 1 110 882
- US-A- 2 822 907
- US-A- 2 931 151

## Beschreibung

Die Erfindung betrifft ein Verfahren und eine Vorrichtung zum Separieren von plattenförmigen Gegenständen in streifenförmige oder plattenförmige Gegenstandsuntereinheiten. Insbesondere betrifft die Erfindung ein derartiges Verfahren und eine derartige Vorrichtung, bei denen die plattenförmigen Gegenstände und die daraus gebildeten streifenförmigen oder plattenförmigen Gegenstandsuntereinheiten Vor- oder Zwischenprodukte der Lebensmittelindustrie sind, insbesondere Kaugummivor- oder -zwischenprodukte.

Die Erfindung wird nachfolgend beispielhaft anhand von Kaugummi als dem zu verarbeitenden und zu fördernden Gegenstand beschrieben. Sofern nachfolgend von Kaugummi, Kaugummistreifen bzw. Streifenkaumgummis oder Kaugummiplatten oder -matten die Rede ist, ist dieses lediglich exemplarisch zu verstehen. Die vorliegende Erfindung betrifft neben Kaugummi auch jegliche andere Art von flächigen, streifenförmigen oder plattenförmigen Gegenständen, insbesondere solche Gegenstände als Vor- oder Zwischenprodukte der Lebensmittelindustrie, die nach einer geeigneten Weiterverarbeitung und Portionierung zum menschlichen Verzehr geeignet sind. Hierbei kann es sich beispielsweise auch um Vor- oder Zwischenprodukte der Gebäck- oder Süßwarenindustrie und dergleichen handeln. Erfasst werden aber auch flächige, streifenförmige oder plattenförmige Produkte, die nicht zum Verzehr bestimmt sind, wie beispielsweise medizinische oder pharmazeutische Produkte, wie medizinische Diagnosestreifen, Blisterverpackungen, und dergleichen.

Wesentlich bei allen derartigen Gegenständen ist es, dass sie als flächiges, streifenförmiges oder platten- oder mattenförmiges Vor- oder Zwischenprodukt in einer kontinuierlich arbeitenden Vorrichtung hergestellt werden und dann an eine nachgeschaltete Vorrichtung übergeben werden, in der die Gegenstände bzw. die daraus gebildeten Gegenstandsuntereinheiten weitergefördert und insbesondere weiterverarbeitet werden. Diese letztere Weiterverarbeitungsvorrichtung ist dabei insbesondere eine Vorrichtung, in der einzelne Produktportionen (z.B. hier einzelne zum Verzehr bestimmte Kaugummistreifen) aus dem angelieferten größeren Vor- oder Zwischenprodukt (bzw. Gegenstandsuntereinheit) gebildet werden, wobei die so entstandenen Einzelprodukte in der Weiterverarbeitungsvorrichtung dann insbesondere auch einzeln oder in Gruppen verpackt werden.

Im Fall von Kaugummis ist eine solche Weiterverarbeitungsvorrichtung bzw. Verpackungsmaschine beispielsweise in der deutschen Patentanmeldung 10 2011 075 439 beschrieben. Bei dieser Kaugummiverpackungsmaschine werden am Maschineneingang zunächst größere rechteckige Platten, insbesondere Streifen, aus Kaugummimaterial bereitgestellt (sogenannte "slabs"), die dann in die Verpackungsmaschine eingeführt werden und aus denen dort die einzelnen zum Verzehr bestimmten streifenförmigen Kaugummiportionen gebildet werden. Diese Kaugummieinzelstreifen werden in der Maschine dann anschließend einzeln und/oder in Gruppen verpackt. Bei dieser und anderen bekannten Kaugummiverpackungsmaschinen werden die angelieferten größeren rechteckigen oder länglichen Kaugummiplatten oder -streifen ("slabs") am Maschineneingang gestapelt in einem Magazin bereitgestellt, aus dem sie nacheinander einzeln entnommen und sukzessive in die kontinuierlich arbeitende Verpackungsmaschine eingeführt werden. Jeder dieser größeren Kaugummistreifen kann dabei typischerweise so bemessen sein, dass in der Verpackungsmaschine nachfolgend beispielsweise ca. 40 einzelne, zum Verkehr bestimmte Produktstreifen (Kaugummistreifen) aus dieser Produktplatte gebildet werden, wobei diese gebildeten Kaugummieinzelstreifen in der Maschine anschließend verpackt und weitergefördert werden.

Ähnliche Vorrichtungen und Verfahren sind bekannt aus der US 2,822,907 A, der US 2,931,151 A und der EP 1 110 882 A1. Das Dokument US 2,822,907 A offenbart ein Verfahren gemäß dem Oberbegriff des Anspruchs 1 und eine Vorrichtung gemäß dem Oberbegriff des Anspruchs 8.

Bei den bekannten Kaugummiverpackungsmaschinen werden die genannten, am Maschineneingang bereitgestellten, größeren rechteckigen oder länglichen Kaugummiplatten oder -streifen ("slabs") als Zwischenprodukt typischerweise aus einer größeren Platte oder Matte aus Kaugummimaterial (sogenanntes "sheet") gebildet. Dabei werden diese größeren Kaugummimatten oder -platten ("sheets") typischerweise gleichmäßig in mehrere gleiche der zuvor genannten länglichen Kaugummistreifen ("slabs") unterteilt. Die größeren platten- oder mattenförmigen Kaugummimaterial-Vorprodukte ("sheets") werden vorher typischerweise in einer Walzstraße aus einem Endlosstrang oder -teppich gebildet, der aus einem Kaugummimaterialteig hergestellt wird. Hierbei werden im Anschluss an die Walzstraße zunächst mittels Rillwalzen oder Messerwalzen oder anderer geeigneter Einrichtungen Schwächungsbereiche, insbesondere Rillen oder Perforationslinien, in dem Kaugummiendlosteppich gebildet, die in der Regel parallel zu der Förderrichtung des Kaugummiteppichs verlaufen. Mittels einer Querschneideeinrichtung werden aus dem Kaugummiendlosteppich dann einzelne Kaugummimatten oder -platten ("sheets") abgetrennt. Die so gebildete Kaugummimatte oder -platte ist dabei so bemessen und kalibriert, dass sie anschließend eine ganzzahlige Vielzahl der in die nachfolgende Verpackungsmaschine einzuführenden länglichen Kaugummistreifen ("slabs") ergibt, wobei diese einzelnen länglichen Kaugummistreifen mittels der in der Kaugummimatte ("sheet") vorhandenen Schwächungsbereiche oder Rillen oder Perforationslinien aus der Kaugummimatte gebildet werden. Der zuvor beschriebene Prozess der Herstellung der gerillten Kaugummimatte oder -platte ("sheet") als Vor- oder Zwischenprodukt wird in der Fachwelt als "Rolling-and-Scoring-Prozess" bezeichnet.

In analoger Weise werden die am Eingang der Weiterverarbeitungs- oder Verpackungsmaschine bereitgestellten länglichen Kaugummistreifen ("slabs") in der Maschine in die zum Verzehr bestimmten kleineren Kaugummistreifen als Einzelportionen unterteilt. Die größeren Kaugummistreifen ("slabs") werden dabei als Vorprodukte wiederum mit regelmäßig angeordneten Schwächungsbereichen oder Rillen oder Perforationslinien versehen, an denen in der Maschine dann jeweils die Einzelstreifen als Endprodukte abgetrennt werden. Auch dieser Vorgang wird in der Fachwelt als "Rolling-and-Scoring-Prozess" bezeichnet.

Die Erfindung betrifft insbesondere die Bildung der am Eingang einer Kaugummiverpackungsmaschine bereitzustellenden länglichen, größeren Kaugummistreifen ("slabs") aus der am Ausgang der Walzstraße bereitstehenden Kaugummiplatte oder -matte ("sheet"). Im Stand der Technik ist es hierfür üblich, dass die länglichen Kaugummistreifen ("slabs") von einer Bedienungsperson manuell an dem Schwächungsbereich (bzw. der Rille oder Perforationslinie) von der größeren Kaugummiplatte ("sheet") abgebrochen werden. Typischerweise nimmt die Bedienungsperson dabei einen Stapel mehrerer gleicher Kaugummiplatten und bricht von diesem dann sukzessive jeweils einen entsprechenden Stapel der länglichen Kaugummistreifen ("slabs") ab. Die Bedienungsperson muss hierfür somit eine immer gleiche Klapp- oder Schwenkbewegung durchführen, um die einzelnen oder gestapelten "slabs" entlang dem Schwächungsbereich von der Kaugummiplatte abzubrechen. Die so gebildeten Kaugummistreifen werden von der Bedienungsperson dann manuell in ein Magazin am Eingang der Kaugummiweiterverarbeitungs- und -verpackungsmaschine eingelegt.

Insbesondere die von der Bedienungsperson durchzuführende Klapp- oder Schwenkbewegung zum Abbrechen der "slabs" von der Matte ist ermüdend und bei andauernder Durchführung und ständiger Wiederholung langfristig auch gesundheitsschädlich. Dieses gilt umso mehr, als die Produktion der Kaugummiplatten ("sheets") mittels der Walzstraße sowie die Abnahme der gebildeten Kaugummistreifen ("slabs") durch die Verpackungsmaschine kontinuierlich laufende Prozesse sind, die nicht ohne weiteres und/oder kurzzeitig unterbrochen und angehalten werden können. Es werden also ständig Kaugummiplatten ("sheets") angeliefert, aus denen die einzelnen "slabs" zu bilden sind, die kontinuierlich von der Verpackungsmaschine abgenommen werden, so dass die die oben beschriebene Bildung und den Transfer der "slabs" durchführende Bedienungsperson daher im Wesentlichen keine Unterbrechung in diesen Arbeitsschritten zulassen kann, jedenfalls nicht solange die vor- und nachgeschalteten Produktions- und Weiterverarbeitungsmaschinen arbeiten. Diese manuellen Arbeitsschritte stellen somit eine fehlerträchtige Schwachstelle in dem Gesamtprozess dar, der ansonsten im Wesentlichen von kontinuierlich und automatisch arbeitenden Maschinen gebildet wird.

Ausgehend von diesen Nachteilen und Problemen des Standes der Technik liegt der Erfindung die Aufgabe zugrunde, ein verbessertes Verfahren bzw. eine verbesserte Vorrichtung für die Bildung einzelner streifenförmiger oder plattenförmiger Gegenstandsuntereinheiten, insbesondere einzelner Kaugummistreifen ("slabs"), als Zwischenprodukte aus größeren plattenförmigen Gegenständen, insbesondere größeren Kaugummiplatten ("sheets"), zu schaffen, wobei bei diesem Verfahren und dieser Vorrichtung die oben beschriebenen, im Stand der Technik gegebenen Nachteile und Probleme nicht auftreten sollen. Insbesondere sollen durch das erfindungsgemäße Verfahren und die erfindungsgemäße Vorrichtung die durch die manuellen Arbeitsschritte bedingten Schwachstellen in dem Gesamtprozess der Herstellung und Verpackung von Kaugummis reduziert oder vollständig vermieden werden.

Diese Aufgabe wird erfindungsgemäße gelöst durch ein Verfahren und eine Vorrichtung zum Separieren von plattenförmigen Gegenständen in streifenförmige oder plattenförmige Gegenstandsuntereinheiten entsprechend Anspruch 1 und Anspruch 8. Dabei sind unter anderem folgende Verfahrensschritte und Vorrichtungsmerkmale vorgesehen: Bereitstellen der plattenförmigen Gegenstände, wobei jeder plattenförmige Gegenstand mindestens einen Schwächungsbereich aufweist; Separieren einzelner streifenförmiger oder plattenförmiger Gegenstandsuntereinheiten sukzessive aufeinander folgend von den bereitgestellten plattenförmigen Gegenständen, wobei das Separieren mittels einer Förder- und Separiervorrichtung an den Schwächungsbereichen der plattenförmigen Gegenstände erfolgt; und Weiterfördern der einzelnen gebildeten streifenförmigen oder plattenförmigen Gegenstandsuntereinheiten.

Durch das erfindungsgemäße Verfahren und die erfindungsgemäße Vorrichtung ist somit eine maschinelle, automatische Unterteilung der bereitgestellten größeren Gegenstandsplatte in mehrere Streifen oder kleinere Platten des Gegenstandsmaterials möglich. Dadurch werden entsprechende manuell durchzuführende Arbeitsschritte vermieden.

In einer bevorzugten Ausführungsform der Erfindung sind die bereitgestellten plattenförmigen Gegenstände Kaugummivor- oder -zwischenprodukte in der Form von Kaugummiplatten (sogenannte "sheets"), und die mit der erfindungsgemäßen Vorrichtung und dem erfindungsgemäßen Verfahren daraus gebildeten streifenförmigen oder plattenförmigen Gegenstandsuntereinheiten sind Kaugummivor- oder -zwischenprodukte in der Form länglicher Kaugummistreifen oder kleinerer Kaugummiplatten (sogenannte "slabs"). Letztere können dann einer Weiterverarbeitungs- und/oder Verpackungsmaschine zugeführt werden, in der aus den gebildeten Kaugummistreifen ("slabs") zum Verzehr bestimmte, kleinere streifenförmige Kaugummieinzelportionen hergestellt werden. In dieser Maschine werden die streifenförmigen Kaugummieinzelportionen dann anschließend einzeln und/oder in Gruppen in Verpackungsmaterial verpackt.

Das erfindungsgemäße Verfahren und die erfindungsgemäße Vorrichtung ist somit in der Gesamtprozessabfolge der Herstellung und Verpackung von Kaugummistreifen zwischen den Ausgang einer Walzstraße, in der die größeren Kaugummimaterialplatten ("sheets") gebildet werden, und den Eingang einer Weiterverarbeitungs- und/oder Verpackungsmaschine geschaltet, in der die aus der Kaugummiplatte gebildeten einzelnen Kaugummistreifen ("slabs") weiterverarbeitet und insbesondere in kleine Kaugummieinzelportionen unterteilt und verpackt werden.

Gemäß einer bevorzugten Ausführungsform der Erfindung hat der plattenförmige Gegenstand (Kaugummi-Sheet) eine rechteckige Form, wobei die in ihm vorhandenen Schwächungsbereiche mehrere parallel zueinander und parallel zu einem der Ränder und im Wesentlichen über die gesamte Breite des plattenförmigen Gegenstands verlaufende Rillen oder Perforationslinien in dem Gegenstand derart aufweisen, dass eine ganzzahlige Anzahl streifenförmiger oder plattenförmiger Gegenstandsuntereinheiten (Kaugummi-Slabs) aus dem plattenförmigen Gegenstand gebildet werden kann.

Das erfindungsgemäße Verfahren und die erfindungsgemäße Vorrichtung weisen folgende weitere Verfahrensschritte und Vorrichtungsmerkmale auf: Aufnehmen und kraft- und formschlüssiges Halten der plattenförmigen Gegenstände jeweils einzeln aufeinander folgend mittels geeigneter Einrichtungen an der Förder- und Separiervorrichtung; Fördern der plattenförmigen Gegenstände in der Ebene ihrer Erstreckung und in einer Richtung senkrecht zu dem Verlauf der Schwächungsbereiche oder der Rillen oder der Perforationslinien mittels geeigneter Einrichtungen; Abtrennen des in Förderrichtung des plattenförmigen Gegenstands jeweils vordersten Teils des plattenförmigen Gegenstands von diesem Gegenstand an dem jeweils vordersten Schwächungsbereich oder der jeweils vordersten Rille oder Perforationslinie mittels geeigneter Einrichtungen zur Bildung der streifenförmigen oder plattenförmigen Gegenstandsuntereinheit; und Ablegen der gebildeten streifenförmigen oder plattenförmigen Gegenstandsuntereinheit mittels geeigneter Einrichtungen.

Erfindungsgemäß weist die Förder- und Separiervorrichtung ein mit Saugelementen versehenes, bandartig umlaufendes Fördermittel auf, wobei die Saugwirkung der Saugelemente ein- und ausschaltbar ist, wobei die Saugelemente den plattenförmigen Gegenstand mittels ihrer Saugwirkung aufnehmen und halten und in der Förderrichtung des Fördermittels mitnehmen, und wobei die Saugelemente den Gegenstand bei ausgeschalteter Saugwirkung loslassen. Die den plattenförmigen Gegenstand haltenden Saugelemente sind dabei derart angeordnet, dass jeweils mindestens ein Saugelement zwischen jeweils zwei benachbarten Schwächungsbereichen oder Rillen oder Perforationslinien an dem plattenförmigen Gegenstand angreift, wobei der in Förderrichtung des plattenförmigen Gegenstands jeweils vorderste, die streifenförmige oder plattenförmige Gegenstandsuntereinheit bildende Teil des plattenförmigen Gegenstands von diesem dadurch abgetrennt wird, dass das diesem Teil zugeordnete Saugelement aufgrund des Umlaufs des Fördermittels aus der Förderebene des plattenförmigen Gegenstands heraus bewegt und insbesondere heraus geschwenkt wird, wodurch dieser Teil des plattenförmigen Gegenstands vor dem jeweils vordersten Schwächungsbereich oder der jeweils vordersten Rille oder Perforationsrille aus der Förderebene heraus bewegt wird, und wobei die gebildete streifenförmige oder plattenförmige Gegenstandsuntereinheit von der Förder- und Separiervorrichtung dadurch abgelegt wird, dass die Saugwirkung des der abgetrennten Gegenstandsuntereinheit zugeordneten Saugelements ausgeschaltet wird. Die Saugelemente sind dabei vorzugsweise derart angeordnet, dass mehrere Saugelemente im wesentlichen nebeneinander und senkrecht zu der Förderrichtung des Fördermittels zwischen jeweils zwei benachbarten Schwächungsbereichen oder Rillen oder Perforationslinien im Wesentlichen über die gesamte Breite des plattenförmigen Gegenstands an diesen angreifen.

In einer weiteren Ausführungsform der Erfindung können die Vorrichtungen zum Weiterfördern der von der Förder- und Separiervorrichtung gebildeten einzelnen streifenförmigen oder plattenförmigen Gegenstandsuntereinheiten eine Sammeleinrichtung aufweisen oder dieser vorgeschaltet sein, in der mehrere streifenförmige oder plattenförmige Gegenstandsuntereinheiten, insbesondere in der Form eines ausgerichteten Stapels übereinander liegend, zwischengelagert werden und aus der sie für eine Weiterverarbeitung entnommen werden.

In noch einer weiteren Ausführungsform der Erfindung können die Eigenschaften, insbesondere die Materialbeschaffenheit und/oder die Abmessungen, der gebildeten streifenförmigen oder plattenförmigen Gegenstandsuntereinheiten mittels Sensoreinrichtungen ermittelt werden, wobei über geeignete Steuerungseinrichtungen mit den Sensoreinrichtungen gekoppelte Fördereinrichtungen vorgesehen sind, über die diejenigen Gegenstandsuntereinheiten, deren ermittelte Eigenschaften nicht mit vorgegebenen Werten übereinstimmen, aus dem gesamten Förderprozess ausgeschleust werden, so dass diese fehlerhaften Gegenstandsuntereinheiten insbesondere nicht an die Sammeleinrichtung und/oder an sich daran anschließende Weiterverarbeitungseinrichtungen (z.B. Verpackungsmaschine) übergeben werden.

Die plattenförmigen Gegenstände können der Förder- und Separiervorrichtung einzeln und sukzessive aufeinander folgend zugeführt werden. Vorzugsweise können die plattenförmigen Gegenstände vor der Förder- und Separiervorrichtung aber auch in Form eines Stapels mehrerer gleicher plattenförmiger Gegenstände bereitgestellt werden, wobei die Förder- und Separiervorrichtung die plattenförmigen Gegenstände dann jeweils einzeln aufeinander folgend aus dem Stapel aufnimmt.

Weitere Einzelheiten und Vorteile der Erfindung ergeben sich aus der nachfolgenden detaillierten Beschreibung eines Ausführungsbeispiels anhand der beigefügten Zeichnungen.
- Fig. 1: zeigt die erfindungsgemäße Separiervorrichtung in einer Ansicht von der Seite.
- Fig. 2: zeigt die erfindungsgemäße Separiervorrichtung als vergrößertes Detail der Fig. 1 in einer Ansicht von der Seite.
- Fig. 3: zeigt die Förder- und Separiervorrichtung der erfindungsgemäßen Separiervorrichtung in einer perspektivischen Ansicht.
- Fig. 4: zeigt Einzelheiten der erfindungsgemäßen Separiervorrichtung in einer Ansicht von oben.
- Fig. 5: zeigt Einzelheiten der erfindungsgemäßen Separiervorrichtung in einer Ansicht von der Seite.

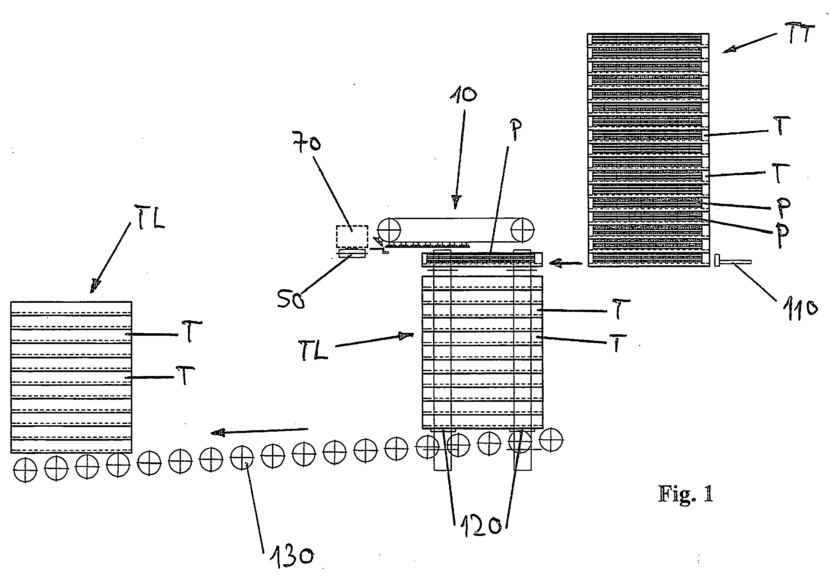

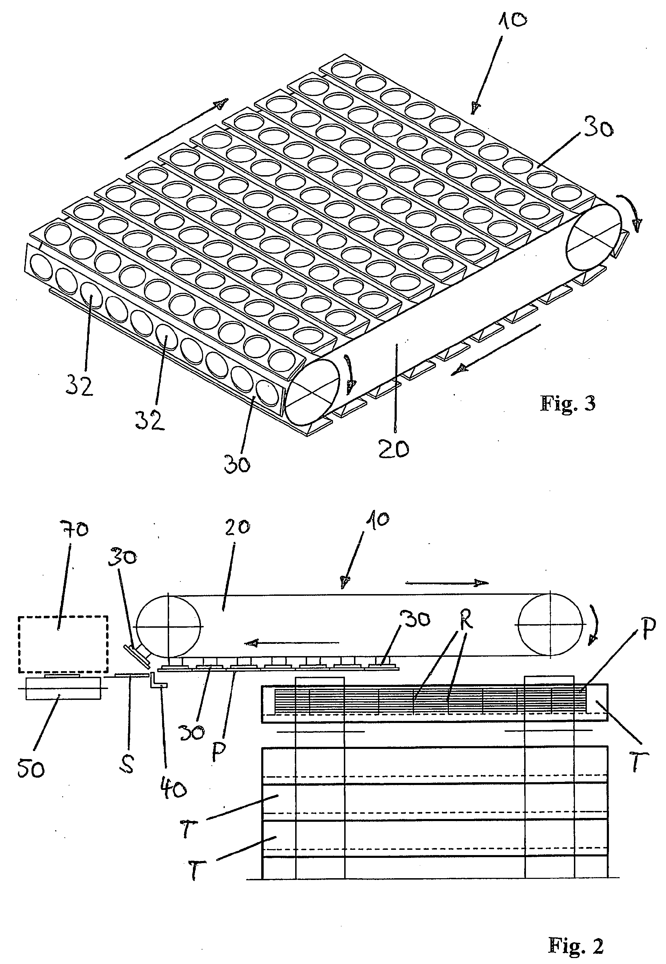

Fig. 1 zeigt in einer Seitenansicht eine Vorrichtung zum Separieren von plattenförmigen Gegenständen, vorliegend insbesondere Kaugummiplatten oder Kaugummi-Sheets, in streifenförmige oder plattenförmige Gegenstandsunterheiten, vorliegend insbesondere Kaugummistreifen oder Kaugummi-Slabs. Diese Vorrichtung umfasst insbesondere eine Förder- und Separiervorrichtung 10, mittels der die einzelnen Kaugummistreifen (Slabs) S sukzessive aufeinander folgend von den bereitgestellten Kaugummiplatten (Sheets) P abgetrennt werden. Die Förder- und Separiervorrichtung 10 ist in einer vergrößerten Form in den Figs. 2 und 3 dargestellt. Die Kaugummiplatten P werden, wie oben beschrieben, in einer Walzstraße hergestellt (nicht dargestellt) und dann einzeln oder gestapelt an der Förder- und Separiervorrichtung 10 bereitgestellt. Insbesondere werden die Kaugummiplatten P in Stapeln bereitgestellt, wobei beispielsweise jeweils ein Stapel mehrerer Kaugummiplatten P auf einem Tablett T (Tray) angeordnet ist. Die Kaugummiplatten P werden der Förder- und Separiervorrichtung 10 dann aus dem Stapel jeweils einzeln aufeinander folgend zugeführt.

Wie in Fig. 1 dargestellt ist, können in einer Ausführungsform zunächst mehrere Tabletts T vor der Förder- und Separiervorrichtung 10 als Stapel TT bereitgestellt werden, wobei jedes Tablett T einen Stapel mehrerer Kaugummiplatten P hält. Mittels eines Schiebers 110 wird dann beispielsweise das unterste gefüllte Tablett T aus dem Stapel TT ausgeschoben und unter der Förder- und Separiervorrichtung 10 bereitgestellt. In dieser Position des Tabletts T werden die einzelnen Kaugummiplatten P dann nacheinander an die Fördermittel 20 der Förder- und Separiervorrichtung 10 übergeben. Dazu kann beispielsweise eine Hubeinrichtung 120 vorgesehen sein, die das bereitgestellte Tablett T hält und ggf. anhebt, damit die in dem Stapel jeweils oberste, einzelne Kaugummiplatte P von der Förder- und Separiervorrichtung 10 aus dem Tablett T entnommen bzw. an die Förder- und Separiervorrichtung 10 übergeben werden kann. Die Hubeinrichtung 120 kann außerdem dazu dienen, das Tablett T nach unten abzusetzen, sobald die letzte Kaugummiplatte P aus ihm entnommen worden ist. Auf diese Weise kann unter der Förder- und Separiervorrichtung 10 ein Stapel TL leerer Tabletts T gebildet werden, der von der Hubeinrichtung 120 sukzessive nach unten bewegt wird, damit jeweils ein neues, mit Kaugummiplatten P gefülltes Tablett T oberhalb dieses Stapels TL mittels des Schiebers 110 unter die oder in den Bereich der Förder- und Separiervorrichtung 10 eingeschoben werden kann und zur Entnahme der Kaugummiplatten P durch die Förder- und Separiervorrichtung 10 bereitsteht. Sobald eine bestimmte Anzahl entleerter Tabletts T in dem Stapel TL vorhanden ist, wird dieser Stapel TL leerer Tabletts T von der Position unterhalb der Förder- und Separiervorrichtung 10 ausgeschoben und/oder beispielsweise mittels einer Rollenbahn 130 ausgefahren. Die leeren Tabletts T stehen dann für eine erneute Befüllung mit Kaugummiplatten P zur Verfügung.

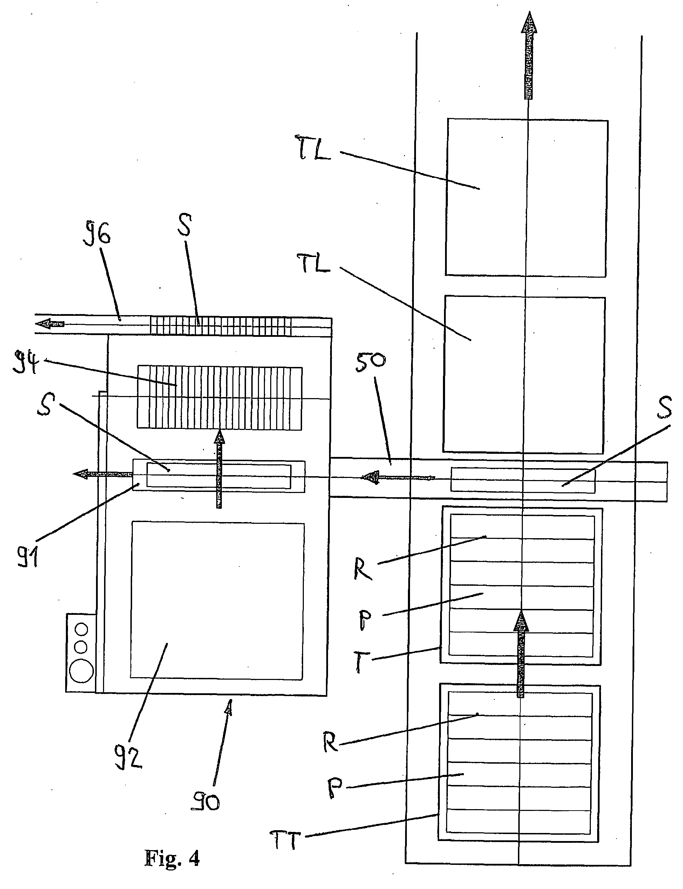

Fig. 4 zeigt in einer Ansicht von oben Teile der Gesamtanlage, wobei hier insbesondere die Anlieferung und Bereitstellung der mit den Kaugummiplatten P befüllten Tabletts T vor und unterhalb der (in dieser Figur nicht dargestellten) Förder- und Separiervorrichtung 10 ersichtlich ist. In Fig. 4 befindet sich rechts ganz unten der Stapel TT der gefüllten Tabletts, aus dem (in Richtung des dargestellten Pfeils) jeweils ein Tablett T in den Bereich der Förder- und Separiervorrichtung 10 ausgeschoben wird (Tablett T in Entnahmeposition). Anschließend werden die vollständig entleerten Tabletts T dann (in Fig. 4 rechts weiter nach oben) aus dem Bereich der Förder- und Separiervorrichtung 10 ausgeschoben, insbesondere als Stapel TL leerer Tabletts.

Wie in Fig. 4 des weiteren ersichtlich ist, sind die angelieferten, in den Tabletts T liegenden Kaugummiplatten P mit Schwächungsbereichen oder Rillen oder Perforationslinien R versehen, die für die Abtrennung der einzelnen Kaugummistreifen S von der Kaugummiplatte P erforderlich sind, wie es unten weiter beschrieben wird. Wie Fig. 4 zeigt, sind die Rillen R in der Kaugummiplatte P parallel und unter gleichen Abständen zueinander, senkrecht zu der Richtung der Zuführung (vgl. Richtung des dargestellten Pfeils) des Tabletts T zu der Förder- und Separiervorrichtung 10 angeordnet. In dem in Fig. 4 gezeigten Beispiel können aus einer Kaugummiplatte P somit sechs Kaugummistreifen S gebildet werden. Es versteht sich aber, dass auch jede andere geeignete Anzahl von Kaugummistreifen S vorgesehen sein kann.

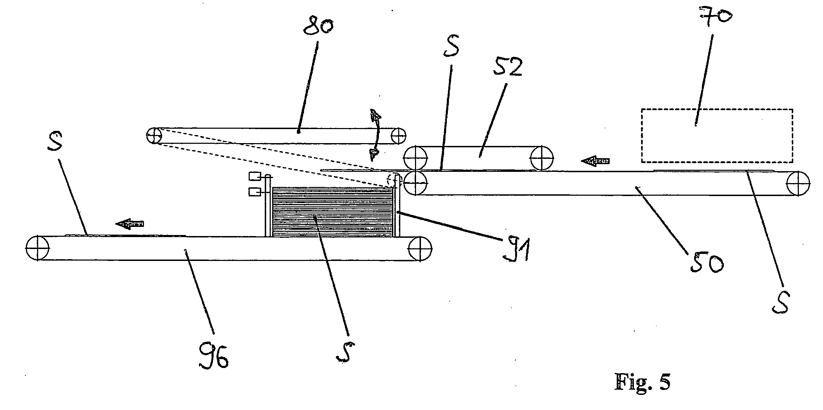

Wie insbesondere aus den Figs. 1 und 2 ersichtlich ist, schließen sich an die Förder- und Separiervorrichtung 10 Fördermittel 50 zum Ab- und Weiterfördern der aus den Kaugummiplatten P gebildeten einzelnen Kaugummistreifen S an. Diese Fördermittel 50 werden unten unter Bezugnahme auf die Figs. 4 und 5 weiter beschrieben.

Wie insbesondere die Figs. 2 und 3 zeigen, besteht die Förder- und Separiervorrichtung 10 aus einem bandartig umlaufenden Fördermittel 20, an dem in regelmäßigen Abständen Saugelemente 30 angeordnet sind. Die Saugwirkung der Saugelemente 30 kann beispielsweise durch einen Unterdruck bewirkt werden, der in Saugköpfen oder Vakuumkammern 32 an den Saugelementen 30 erzeugt wird, wobei dieser Unterdruck und damit die Saugwirkung der Saugelemente 30, 32 ein- und ausgeschaltet werden kann. Die Saugelemente 30, 32 nehmen die Kaugummiplatte P aus dem bereitgestellten Tablett T mittels ihrer Saugwirkung auf und halten sie kraft- und formschlüssig fest. Aufgrund der umlaufenden Bewegung des Fördermittels oder Förderbands 20 wird die so aufgenommene einzelne Kaugummiplatte P dann mitgenommen und weitergefördert. Die Kaugummiplatte P wird von dem Förderband 20 somit insbesondere in der Ebene ihrer Erstreckung und in einer Richtung senkrecht zu dem Verlauf der in der Kaugummiplatte P vorgesehenen Rillen R gefördert.

Wie Fig. 2 weiter zeigt, sind die Saugelemente 30 an dem Förderband 20 derart angeordnet, dass jeweils mindestens ein Saugelement 30 zwischen jeweils zwei benachbarten Rillen R an der Kaugummiplatte P angreift, d.h. dass jeweils mindestens ein Saugelement 30 für jeden aus der Kaugummiplatte P zu bildenden Kaugummistreifen S vorgesehen ist. Die Saugelemente 30 können dabei insbesondere auch so ausgeführt sein, dass mehrere Saugelemente oder Saugköpfe oder Vakuumkammern 32 nebeneinander, d.h. senkrecht zu der Förderrichtung des Förderbands 20, angeordnet sind und zwischen jeweils zwei benachbarten Rillen R der Kaugummiplatte P im Wesentlichen über die gesamte Breite der Kaugummiplatte P an dieser angreifen (vgl. Fig. 3). Eine Reihe der in dem quer verlaufenden Saugelement 30 nebeneinander angeordneten mehreren Vakuumkammern 32 (in Fig. 3) entspricht somit im Wesentlichen der Länge und Breite des aus der Kaugummiplatte P zu bildenden einzelnen Kaugummistreifens S.

Die Kaugummistreifen S werden von der Kaugummiplatte P dann in der Weise abgetrennt, dass die Saugelemente 30 aufgrund des Umlaufs des Förderbands 20 aus der Bewegungs- oder Förderebene der Kaugummiplatte P heraus bewegt oder geschwenkt werden. Dabei wird derjenige Teil der Kaugummiplatte P, der sich in Förderrichtung ganz vorne befindet, mit der Schwenkbewegung des ihm zugeordneten Saugelements 30 an der bzw. vor der jeweils in Förderrichtung vordersten Rille R aus der Förderebene der Kaugummiplatte P heraus bewegt oder geschwenkt, wie es in Fig. 2 am linken Ende des umlaufenden Förderbands 20 erkennbar ist. Dieser von dem betreffenden Saugelement 30 gehaltene vorderste Teil der Kaugummiplatte P wird durch diese Schwenkbewegung somit an der Rille R von der Kaugummiplatte P abgebrochen. Dieser abgetrennte Teil der Kaugummiplatte P bildet dann den gewünschten einzelnen Kaugummistreifen S (Slab).

Nachdem der Kaugummistreifen S auf diese Weise von dem verbleibenden Rest der Kaugummiplatte P abgetrennt worden ist, wird die Saugwirkung des dem gebildeten Kaugummistreifen S zugeordneten Saugelements 30 abgeschaltet, womit dieses Saugelement 30 den Kaugummistreifen S dann loslässt. Dadurch wird der einzelne gebildete Kaugummistreifen S von der Förder- und Separiervorrichtung 10 abgegeben und insbesondere an eine nachfolgende Einrichtung zum Weiterfördern des Kaugummistreifens S übergeben. Hier kann der gebildete Kaugummistreifen S beispielsweise mittels eines Schiebers und/oder eines Rechenfördermittels 40 an ein nachfolgendes Fördermittel 50 (z.B. ein weiteres umlaufendes Förderband) übergeben werden, durch das der Kaugummistreifen S abgenommen und weitergefördert wird.

Wie Fig. 4 zeigt, wird der gebildete Kaugummistreifen S mittels des Förderbands 50 dann an eine Sammeleinrichtung (Magazin) 91 übergeben, in der die angelieferten Kaugummistreifen S gestapelt und so zwischengelagert werden. Aus diesem Magazin 91 werden die Kaugummistreifen S anschließend einzeln entnommen, insbesondere mittels eines Plattenschiebers 92 nacheinander einzeln ausgeschoben. Dabei können die Kaugummistreifen S dann einer Rillwalze oder Messerwalze 94 zugeführt werden, die in dem Kaugummistreifen S wiederum Schwächungsbereiche oder Rillen oder Perforationslinien erzeugt, so dass im Anschluss an den Durchlauf durch die Rillwalze 94 ein mit parallelen, gleichmäßig beabstandeten Rillen versehener Kaugummistreifen S vorliegt.. In diesem Kaugummistreifen S entsprechen die durch die Rillen getrennten einzelnen Abschnitte jeweils einer letztlich zu bildenden, zum Verzehr bestimmten Kaugummieinzelportion. Über ein weiteres Fördermittel (Förderband) 96 wird der so gerillte Kaugummistreifen S dann einer Kaugummiverpackungsmaschine zugeführt, in der die Kaugummieinzelstreifen zunächst aus dem Kaugummistreifen S vereinzelt und diese Einzelportionsstreifen anschließend einzeln und/oder in Gruppen verpackt werden. Die in Fig. 4 dargestellte Kombination des Magazins 91 mit dem Schieber 92 und den Messer- oder Rillwalzen 94 wird in der Fachwelt typischerweise als Cold-Scoring-Einheit 90 bezeichnet.

In einer Ausführungsform der Gesamtanlage kann des weiteren vorgesehen sein, dass der aus der Kaugummiplatte P gebildete einzelne Kaugummistreifen S einer Qualitätskontrolle unterzogen wird, bei der bestimmte Eigenschaften, beispielsweise die Materialbeschaffenheit und/oder die Abmessungen des Kaugummistreifens S überprüft werden, wobei diejenigen Kaugummistreifen S, deren ermittelte Eigenschaften und/oder Qualitätsmerkmale nicht mit vorgegebenen Werten übereinstimmen, aus dem gesamten Förderprozess ausgeschleust werden. Dadurch wird verhindert, dass fehlerhafte oder qualitativ minderwertige Kaugummistreifen S an die nachfolgende Weiterverarbeitungs- und/oder Verpackungsmaschine übergeben werden.

Für diese Inspektion oder Kontrolle der Qualität des Kaugummistreifens S kann in der Förderstrecke im Anschluss an die Förder- und Separiereinrichtung 10 eine Sensoreinrichtung 70 vorgesehen sein, die die relevanten Eigenschaften und Merkmale des Kaugummistreifens ermittelt und überprüft. Die Sensoreinrichtung 70 kann dabei beispielsweise einen Röntgenscanner aufweisen, der sowohl äußere wie innere Fehler oder Unregelmäßigkeiten des Kaugummistreifens ermittelt, beispielsweise unerwünschte Fremdmaterialeinschlüsse und dergleichen. Sofern die Sensoreinrichtungen 70 von einer Kamera gebildet sind, können dadurch im Wesentlichen äußerliche Fehler und die Maßhaltigkeit des Kaugummistreifens S überprüft werden. Es versteht sich, dass auch andere geeignete Sensoreinrichtungen vorgesehen sein können.

Sofern die Sensoreinrichtungen 70 feststellen, dass der Kaugummistreifen S fehlerhaft ist, kann der betreffende Kaugummistreifen S mittels geeigneter Fördereinrichtungen aus dem Förderprozess ausgeschleust werden. Diese Ausschleusefördereinrichtungen 80 sind über geeignete Steuerungseinrichtungen (nicht dargestellt) mit den Sensoreinrichtungen 70 gekoppelt. Wie Fig. 5 zeigt, können die Fördereinrichtungen 80 zum Ausschleusen der fehlerhaften Kaugummistreifen S beispielsweise aus einem verschwenkbaren Förderband gebildet sein, das sich an das der Förder- und Separiereinrichtung 10 nachgeschaltete Förderband 50 anschließt. Sofern die Sensoreinrichtungen 70, beispielsweise im Bereich des Förderbands 50, feststellen, dass der betreffende Kaugummistreifen S qualitativ in Ordnung ist, wird dieser Kaugummistreifen S von dem Förderband 50 in das Sammelmagazin 91 übergeben und damit zur Weiterverarbeitung bereitgestellt. Die "guten" Kaugummistreifen werden dann beispielsweise mittels eines weiteren Fördermittels (Förderbands) 96 an die nachgeschaltete Weiterverarbeitungs- und/oder Verpackungsmaschine übergeben. Wie oben schon beschrieben wurde, können die Kaugummistreifen S dabei beispielsweise mittels eines Schiebers 92 aus dem Magazin 91 ausgeschoben und an das Förderband 96 übergeben werden.

Sofern die Sensoreinrichtungen 70 jedoch feststellen, dass der betreffende Kaugummistreifen S fehlerhaft ist und daher vorzugsweise nicht an die Weiterverarbeitungs- und/oder Verpackungsmaschine übergeben werden soll, wird das Förderband 80 mittels geeigneter Steuerungseinrichtungen, ggfs. in dem Bereich in Förderrichtung vor dem Sammelmagazin 91, in den Bereich des Ausgangs des Förderbands 50 verschwenkt (vgl. Fig. 5). Der von dem Förderband 50 zugeführte fehlerhafte Kaugummistreifen S wird dann an das Förderband 80 übergeben und von diesem abgefördert und dabei insbesondere aus dem Gesamtprozess ausgeschleust. In der Darstellung der Fig. 4 erfolgt das Ausschleusen des fehlerhaften Kaugummistreifens S nach links in Richtung des horizontalen Pfeils links neben dem Magazin 91.

Wie die Figs. 2, 4 und 5 zeigen, wird der Kaugummistreifen S im Anschluss an die Förder- und Separiereinrichtung 10 insbesondere auf der Oberseite des Förderbands 50 liegend in seiner Längsrichtung weitergefördert. Das Förderband 50 kann dabei wahlweise mit einem darüber angeordneten, weiteren Förderband 52 kombiniert sein (sogenannter Oberläufer), das den Kaugummistreifen S von oben ergreift und gemeinsam mit dem Förderband 50 weiterfördert. Durch dieses Zusammenwirken der oberhalb und unterhalb der Förderbahn des Kaugummistreifens S angeordneten Förderbänder 50, 52 wird u.a. eine maßgenaue Lage und/oder eine definierte Fördergeschwindigkeit (und/oder ggf. auch eine Beschleunigung) des Kaugummistreifens S bewerkstelligt, so dass dieser in einer definierten Art und Weise in das Magazin 91 eingeführt wird.

### Bezugszeichenliste

- P: Plattenförmiger Gegenstand, Kaugummiplatte, Sheet
- S: Streifenförmige oder plattenförmige Gegenstandsuntereinheit, Kaugummistreifen, Slab
- R: Schwächungsbereich, Rille, Perforationslinie
- T: Tablett, Tray
- TT: Stapel gefüllter Tabletts
- TL: Stapel leerer Tabletts

- 10: Förder- und Separiereinrichtung
- 20: Fördermittel, Förderband
- 30: Saugelement
- 32: Saugelement, Vakuumkammer, Saugkopf

- 40: Schieber, Rechenfördermittel
- 50: Fördermittel, Förderband
- 52: Förderband, Oberläufer

- 70: Sensoreinrichtungen, Scanner
- 80: Ausschleusefördereinrichtungen, Förderband

- 90: Cold-Scoring-Einheit
- 91: Sammeleinrichtung, Magazin
- 92: Schieber
- 94: Rillwalze, Messerwalze
- 96: Fördermittel, Förderband

- 110: Schieber (für Tablett T)
- 120: Hubeinrichtung (für Tabletts T)
- 130: Rollenbahn

## Patentansprüche

1. Verfahren zum Separieren von plattenförmigen Gegenständen (P) in streifenförmige oder plattenförmige Gegenstandsuntereinheiten (S), mit folgenden Schritten:
- Bereitstellen und Fördern der plattenförmigen Gegenstände (P), wobei jeder plattenförmige Gegenstand (P) Schwächungsbereiche (R) aufweist, die senkrecht zu der Förderrichtung der plattenförmigen Gegenstände (P) verlaufen;
- Separieren einzelner streifenförmiger oder plattenförmiger Gegenstandsuntereinheiten (S) sukzessive aufeinander folgend von den bereitgestellten plattenförmigen Gegenständen (P), wobei das Separieren mittels einer Förder- und Separiervorrichtung (10) an den Schwächungsbereichen (R) der plattenförmigen Gegenstände (P) erfolgt, indem die Förder- und Separiervorrichtung (10) die plattenförmigen Gegenstände (P) jeweils einzeln aufeinander folgend aufnimmt und kraft- und formschlüssig hält und in der Ebene ihrer Erstreckung fördert, und indem der in Förderrichtung des plattenförmigen Gegenstands (P) jeweils vorderste Teil des plattenförmigen Gegenstands (P) von dem plattenförmigen Gegenstand (P) an dem jeweils vordersten Schwächungsbereich (R) abgetrennt und die dadurch jeweils gebildete streifenförmige oder plattenförmige Gegenstandsuntereinheit (S) abgelegt wird; und
- Weiterfördern der einzelnen gebildeten streifenförmigen oder plattenförmigen Gegenstandsuntereinheiten (S);
**dadurch gekennzeichnet, dass** der Schritt des Separierens mittels der Förder- und Separiervorrichtung (10) folgende weitere Schritte umfasst:
- Aufnehmen, Halten und Fördern des plattenförmigen Gegenstands (P) mittels der Saugwirkung von Saugelementen (30, 32), die an einem bandartig umlaufenden Fördermittel (20) angeordnet sind, wobei die Saugwirkung der Saugelemente (30, 32) ein- und ausschaltbar ist, und wobei die Saugelemente (30, 32) den Gegenstand (P, S) bei ausgeschalteter Saugwirkung loslassen;
- Halten des plattenförmigen Gegenstands (P) durch die Saugelemente (30, 32) derart, dass jeweils mindestens ein Saugelement (30, 32) zwischen jeweils zwei benachbarten Schwächungsbereichen (R) an dem plattenförmigen Gegenstand (P) angreift;
- Abtrennen des in Förderrichtung des plattenförmigen Gegenstands (P) jeweils vordersten, die streifenförmige oder plattenförmige Gegenstandsuntereinheit (S) bildenden Teils von dem plattenförmigen Gegenstand (P) dadurch, dass ein diesem Teil zugeordnetes Saugelement (30, 32) aufgrund des Umlaufs des Fördermittels (20) aus der Förderebene des plattenförmigen Gegenstands (P) heraus geschwenkt wird, wodurch dieser Teil des plattenförmigen Gegenstands (P) vor dem jeweils vordersten Schwächungsbereich (R) aus der Förderebene heraus bewegt wird; und
- Ablegen der gebildeten streifenförmigen oder plattenförmigen Gegenstandsuntereinheit (S) dadurch, dass die Saugwirkung des der abgetrennten Gegenstandsuntereinheit (S) zugeordneten Saugelements (30, 32) ausgeschaltet wird.

2. Verfahren nach Anspruch 1, **dadurch gekennzeichnet, dass** der plattenförmige Gegenstand (P) eine rechteckige Form hat, wobei die Schwächungsbereiche mehrere parallel zueinander und parallel zu einem der Ränder und im wesentlichen über die gesamte Breite des plattenförmigen Gegenstands (P) verlaufende Rillen (R) oder Perforationslinien in dem Gegenstand (P) derart aufweisen, dass eine ganzzahlige Anzahl streifenförmiger oder plattenförmiger Gegenstandsuntereinheiten (S) aus dem plattenförmigen Gegenstand (P) gebildet werden kann.

3. Verfahren nach einem der Ansprüche 1 oder 2, **dadurch gekennzeichnet, dass** die gebildeten streifenförmigen oder plattenförmigen Gegenstandsuntereinheiten (S) von der Förder- und Separiervorrichtung (10) an eine Sammeleinrichtung (91) übergeben werden, in der mehrere streifenförmige oder plattenförmige Gegenstandsuntereinheiten (S) zwischengelagert werden und aus der sie für eine Weiterverarbeitung entnommen werden.

4. Verfahren nach einem der vorhergehenden Ansprüche, **dadurch gekennzeichnet, dass** die Eigenschaften, insbesondere die Materialbeschaffenheit und/oder die Abmessungen, der gebildeten streifenförmigen oder plattenförmigen Gegenstandsuntereinheiten (S) mit Sensoreinrichtungen (70) ermittelt werden, und dass diejenigen Gegenstandsuntereinheiten (S), deren ermittelte Eigenschaften nicht mit vorgegebenen Werten übereinstimmen, aus dem Förderprozess ausgeschleust werden und insbesondere nicht an die Sammeleinrichtung (91) und/oder sich daran anschließende Weiterverarbeitungseinrichtungen übergeben werden.

5. Verfahren nach einem der vorhergehenden Ansprüche, **dadurch gekennzeichnet, dass** die plattenförmigen Gegenstände (P) in Förderrichtung vor der Förder- und Separiervorrichtung (10) in Form eines Stapels mehrerer gleicher plattenförmiger Gegenstände (P) bereitgestellt werden, und dass die Förder- und Separiervorrichtung (10) die plattenförmigen Gegenstände (P) jeweils einzeln aufeinander folgend aus dem Stapel aufnimmt.

6. Verfahren nach einem der Ansprüche 1 bis 5, **dadurch gekennzeichnet, dass** die plattenförmigen Gegenstände (P) und die daraus gebildeten streifenförmigen oder plattenförmigen Gegenstandsuntereinheiten (S) Vor- oder Zwischenprodukte der Lebensmittelindustrie sind, insbesondere Kaugummivor- oder -zwischenprodukte.

7. Verfahren nach Anspruch 6, **dadurch gekennzeichnet, dass** die plattenförmigen Gegenstände (P) Kaugummiplatten, sogenannte "sheets", und die daraus gebildeten streifenförmigen oder plattenförmigen Gegenstandsuntereinheiten (S) Kaugummistreifen, sogenannte "slabs", sind, wobei aus den Kaugummistreifen (S) anschließend zum Verzehr bestimmte, streifenförmige Kaugummieinzelportionen hergestellt werden, und wobei die streifenförmigen Kaugummieinzelportionen anschließend einzeln und/oder in Gruppen verpackt werden.

8. Vorrichtung zum Separieren von plattenförmigen Gegenständen (P) in streifenförmige oder plattenförmige Gegenstandsuntereinheiten (S), mit folgenden Merkmalen:
- Vorrichtungen (T) zum Bereitstellen der plattenförmigen Gegenstände (P), wobei jeder bereitgertellte plattenförmige Gegenstand (P) Schwächungsbereiche (R) aufweist, die senkrecht zu einer Förderrichtung der plattenförmigen Gegenstände (P) verlaufen;
- eine Förder- und Separiervorrichtung (10) zum Fördern der plattenförmigen Gegenstände (P) und zum Separieren einzelner streifenförmiger oder plattenförmiger Gegenstandsuntereinheiten (S) sukzessive aufeinander folgend von den bereitgestellten plattenförmigen Gegenständen (P), wobei das Separieren an den Schwächungsbereichen (R) der plattenförmigen Gegenstände (P) erfolgt, wobei die Förder- und Separiervorrichtung (10) folgende weitere Merkmale aufweist:
- Einrichtungen (30, 32) zum Aufnehmen und kraft- und formschlüssigen Halten der plattenförmigen Gegenstände (P) jeweils einzeln aufeinander folgend an der Förder- und Separiervorrichtung (10);
- Einrichtungen (20) zum Fördern der plattenförmigen Gegenstände (P) in der Ebene ihrer Erstreckung;
- Einrichtungen (20, 30, 32) zum Abtrennen des in Förderrichtung des plattenförmigen Gegenstands (P) jeweils vordersten Teils des plattenförmigen Gegenstands (P) von dem plattenförmigen Gegenstand (P) an dem jeweils vordersten Schwächungsbereich (R) und zum Ablegen der dadurch gebildeten streifenförmigen oder plattenförmigen Gegenstandsuntereinheit (S) ;
und
- Vorrichtungen (40, 50) zum Weiterfördern der einzelnen gebildeten streifenförmigen oder plattenförmigen Gegenstandsuntereinheiten (S);
**dadurch gekennzeichnet,**
- **dass** die Förder- und Separiervorrichtung (10) ein mit Saugelementen (30, 32) versehenes, bandartig umlaufendes Fördermittel (20) aufweist, wobei die Saugwirkung der Saugelemente (30, 32) ein- und ausschaltbar ist, wobei die Saugelemente (30, 32) den plattenförmigen Gegenstand (P) mittels ihrer Saugwirkung halten und in der Förderrichtung des Fördermittels (20) mitnehmen, und wobei die Saugelemente (30, 32) den Gegenstand (P, S) bei ausgeschalteter Saugwirkung loslassen;
- **dass** die Saugelemente (30, 32) zum Halten des plattenförmigen Gegenstands (P) derart angeordnet sind, dass jeweils mindestens ein Saugelement (30, 32) zwischen jeweils zwei benachbarten Schwächungsbereichen (R) an dem plattenförmigen Gegenstand (P) angreift;
- **dass** die Einrichtungen (20, 30, 32) zum Abtrennen des in Förderrichtung des plattenförmigen Gegenstands (P) jeweils vordersten, die streifenförmige oder plattenförmige Gegenstandsuntereinheit (S) bildenden Teils von dem plattenförmigen Gegenstand (P) derart arbeiten, dass ein diesem Teil zugeordnetes Saugelement (30, 32) aufgrund des Umlaufs des Fördermittels (20) aus der Förderebene des plattenförmigen Gegenstands (P) heraus geschwenkt wird, so dass dieser Teil des plattenförmigen Gegenstands (P) vor dem jeweils vordersten Schwächungsbereich (R) aus der Förderebene heraus bewegt wird; und
- **dass** die Förder- und Separiervorrichtung (10) derart ausgebildet ist, dass die gebildete streifenförmige oder plattenförmige Gegenstandsuntereinheit (S) von der Förder- und Separiervorrichtung (10) abgelegt wird, indem die Saugwirkung des der abgetrennten Gegenstandsuntereinheit (S) zugeordneten Saugelements (30, 32) ausgeschaltet wird.

9. Vorrichtung nach Anspruch 8, **dadurch gekennzeichnet, dass** die Saugelemente (30, 32) zum Halten des plattenförmigen Gegenstands (P) derart angeordnet sind, dass mehrere Saugelemente (32) nebeneinander und senkrecht zu der Förderrichtung des Fördermittels (20) zwischen jeweils zwei benachbarten Schwächungsbereichen (R) im wesentlichen über die gesamte Breite des plattenförmigen Gegenstands (P) an dem Gegenstand (P) angreifen.

10. Vorrichtung nach einem der Ansprüche 8 oder 9, **dadurch gekennzeichnet, dass** der bereitgestellte plattenförmige Gegenstand (P) eine rechteckige Form hat, wobei die Schwächungsbereiche mehrere parallel zueinander und parallel zu einem der Ränder und im wesentlichen über die gesamte Breite des plattenförmigen Gegenstands (P) verlaufende Rillen (R) oder Perforationslinien in dem Gegenstand (P) derart aufweisen, dass eine ganzzahlige Anzahl streifenförmiger oder plattenförmiger Gegenstandsuntereinheiten (S) aus dem plattenförmigen Gegenstand (P) gebildet werden kann.

11. Vorrichtung nach einem der Ansprüche 8 bis 10, **dadurch gekennzeichnet, dass** die Vorrichtungen (40, 50) zum Weiterfördern der von der Förder- und Separiervorrichtung (10) gebildeten streifenförmigen oder plattenförmigen Gegenstandsuntereinheiten (S) eine Sammeleinrichtung (91) für ein Zwischenlagern mehrerer streifenförmiger oder plattenförmiger Gegenstandsuntereinheiten (S) vor ihrer Weiterverarbeitung aufweisen.

12. Vorrichtung nach Anspruch 11, **dadurch gekennzeichnet, dass** die streifenförmigen oder plattenförmigen Gegenstandsuntereinheiten (S) in der Sammeleinrichtung (91) in einem ausgerichteten Stapel übereinander liegen.

13. Vorrichtung nach einem der Ansprüche 11 oder 12, **dadurch gekennzeichnet, dass** die Vorrichtungen zum Weiterfördern der von der Förder- und Separiervorrichtung (10) gebildeten streifenförmigen oder plattenförmigen Gegenstandsuntereinheiten (S) folgende weitere Merkmale aufweisen:
- Sensoreinrichtungen (70), die die Eigenschaften, insbesondere die Materialbeschaffenheit und/oder die Abmessungen, der gebildeten streifenförmigen oder plattenförmigen Gegenstandsuntereinheiten (S) ermitteln;
- Fördereinrichtungen (80) zum Ausschleusen derjenigen Gegenstandsuntereinheiten (S), deren ermittelte Eigenschaften nicht mit vorgegebenen Werten übereinstimmen, aus dem Förderprozess, so dass diese Gegenstandsuntereinheiten (S) insbesondere nicht an die Sammeleinrichtung (91) und/oder sich daran anschließende Weiterverarbeitungseinrichtungen übergeben werden; und
- Steuerungseinrichtungen, die mit den Sensoreinrichtungen (70) und den Ausschleusefördereinrichtungen (80) gekoppelt sind.

14. Vorrichtung nach einem der Ansprüche 8 bis 13, **dadurch gekennzeichnet, dass** die Vorrichtungen zum Bereitstellen der plattenförmigen Gegenstände (P) in Förderrichtung vor der Förder- und Separiervorrichtung (10) Einrichtungen (T) zum Bereitstellen der plattenförmigen Gegenstände (P) in Form eines Stapels mehrerer gleicher plattenförmiger Gegenstände (P) aufweisen, wobei die Förder- und Separiervorrichtung (10) die plattenförmigen Gegenstände (P) jeweils einzeln aufeinander folgend aus dem Stapel aufnimmt.

15. Vorrichtung nach einem der Ansprüche 8 bis 14, **dadurch gekennzeichnet, dass** die plattenförmigen Gegenstände (P) und die daraus gebildeten streifenförmigen oder plattenförmigen Gegenstandsuntereinheiten (S) Vor- oder Zwischenprodukte der Lebensmittelindustrie sind, insbesondere Kaugummivor- oder -zwischenprodukte.

16. Vorrichtung nach Anspruch 15, **dadurch gekennzeichnet, dass** die plattenförmigen Gegenstände (P) Kaugummiplatten, sogenannte "sheets", und die daraus gebildeten streifenförmigen oder plattenförmigen Gegenstandsuntereinheiten (S) Kaugummistreifen, sogenannte "slabs", sind, wobei aus den Kaugummistreifen (S) anschließend zum Verzehr bestimmte, streifenförmige Kaugummieinzelportionen hergestellt werden, und wobei die streifenförmigen Kaugummieinzelportionen anschließend einzeln und/oder in Gruppen verpackt werden.

## Claims

1. A method for separating sheet-shaped objects (P) into strip-shaped or slab-shaped object sub-units (S), comprising the following steps:
- providing and conveying the sheet-shaped objects (P), wherein each sheet-shaped object (P) has weakening regions (R) which run perpendicularly to the conveying direction of the sheet-shaped objects (P);
- successively separating individual strip-shaped or slab-shaped object sub-units (S) one after another from the provided sheet-shaped objects (P), wherein separating takes place on the weakening regions (R) of the sheet-shaped objects (P) by means of a conveying and separating device (10), in that the conveying and separating device (10) picks up the sheet-shaped objects (P) in each case individually, successively one after another, and holds them in a force-fitting and form-fitting manner and conveys them in the plane of their extent, and in that, in the conveying direction of the sheet-shaped object (P), the in each case frontmost part of the sheet-shaped object (P) is severed from the sheet-shaped object (P) at the in each case frontmost weakening region (R) and wherein the strip-shaped or slab-shaped object sub-unit (S) respectively formed thereby is deposited; and
- onward conveying of the individual, formed strip-shaped or slab-shaped object sub-units (S) ;
**characterized in that** the step of separating by means of the conveying and separating device (10) comprises the following further steps:
- picking up, holding and conveying the sheet-shaped object (P) by means of the suction effect of suction elements (30, 32) which are arranged on a conveying means (20) which revolves in a belt-like manner, wherein the suction effect of the suction elements (30, 32) is activatable and deactivatable, and wherein the suction elements (30, 32) release the object (P, S) when the suction effect is deactivated;
- holding the sheet-shaped object (P) by way of the suction elements (30, 32) in such a manner that in each case at least one suction element (30, 32) engages with the sheet-shaped object (P) between in each case two adjacent weakening regions (R);
- severing in each case the frontmost part, in the conveying direction of the sheet-shaped object (P), which forms the strip-shaped or slab-shaped object sub-unit (S) from the sheet-shaped object (P) **in that**, on account of the revolving motion of the conveying means (20), a suction element (30, 32) which is assigned to said part is pivoted out of the conveying plane of the sheet-shaped object (P), on account of which said part of the sheet-shaped object (P), ahead of the in each case frontmost weakening region (R), is moved out of the conveying plane; and
- depositing the formed strip-shaped or slab-shaped object sub-unit (S) **in that** the suction effect of the suction element (30, 32) which is assigned to the severed object sub-unit (S) is deactivated.

2. The method as claimed in claim 1, **characterized in that** the sheet-shaped object (P) has a rectangular shape, wherein the weakening regions have a plurality of scores (R) or perforation lines which run parallel to one another and parallel to one of the edges and substantially across the entire width of the sheet-shaped object (P) in such a manner in the object (P) that an integer number of strip-shaped or slab-shaped object sub-units (S) can be formed from the sheet-shaped object (P).

3. The method as claimed in one of claims 1 or 2, **characterized in that** the formed strip-shaped or slab-shaped object sub-units (S) are transferred from the conveying and separating device (10) to an assembling installation (91) in which a plurality of strip-shaped or slab-shaped object sub-units (S) are stored temporarily and from which they are retrieved for further processing.

4. The method as claimed in one of the preceding claims, **characterized in that** the properties, in particular the material consistency and/or the dimensions, of the formed strip-shaped or slab-shaped object sub-units (S) are detected by sensor installations (70), and **in that** those object sub-units (S) of which the detected properties do not conform to predefined values are discharged from the conveying process and, in particular, are not transferred to the assembling installation (91) and/or to further-processing installations subsequent to the latter.

5. The method as claimed in one of the preceding claims, **characterized in that** the sheet-shaped objects (P), in the conveying direction in front of the conveying and separating device (10), are provided in the form of a stack of a plurality of identical sheet-shaped objects (P), and **in that** the conveying and separating device (10) receives the sheet-shaped objects (P) from the stack in each case individually, one after another.

6. The method as claimed in one of claims 1 to 5, **characterized in that** the sheet-shaped objects (P) and the strip-shaped or slab-shaped object sub-units (S) which are formed from the former are preliminary products or intermediate products of the foodstuff industry, in particular preliminary chewing-gum products or intermediate chewing-gum products.

7. The method as claimed in claim 6, **characterized in that** the sheet-shaped objects (P) are chewing-gum sheets and the strip-shaped or slab-shaped object sub-units (S) which are formed from the former are chewing-gum slabs, wherein individual strip-shaped chewing-gum portions which are destined for consumption are subsequently manufactured from the chewing-gum slabs (S), and wherein the individual strip-shaped chewing-gum portions are subsequently packed individually and/or in groups.

8. A device for separating sheet-shaped objects (P) into strip-shaped or slab-shaped object sub-units (S), comprising the following features:
- devices (T) for providing the sheet-shaped objects (P), wherein each provided sheet-shaped object (P) has weakening regions (R) which run perpendicularly to a conveying direction of the sheet-shaped objects (P);
- a conveying and separating device (10) for conveying the sheet-shaped objects (P) and for successively separating individual strip-shaped or slab-shaped object sub-units (S) one after another from the provided sheet-shaped objects (P), wherein separating takes place on the weakening regions (R) of the sheet-shaped objects (P), wherein the conveying and separating device (10) has the following further features:
- installations (30, 32) for picking up and holding in a force-fitting and form-fitting manner, in each case individually, one after another, the sheet-shaped objects (P) on the conveying and separating device (10);
- installations (20) for conveying the sheet-shaped objects (P) in the plane of their extent;
- installations (20, 30, 32) for severing in each case the frontmost part of the sheet-shaped object (P), in the conveying direction of the sheet-shaped object (P), from the sheet-shaped object (P) at the in each case frontmost weakening region (R) and for depositing the strip-shaped or slab-shaped object sub-unit (S) formed thereby;
and
- devices (40, 50) for the onward conveying of the individual, formed strip-shaped or slab-shaped object sub-units (S);
**characterized in that**
- the conveying and separating device (10) has a conveying means (20) which revolves in a belt-like manner and which is provided with suction elements (30, 32), wherein the suction effect of the suction elements (30, 32) is activatable and deactivatable, wherein the suction elements (30, 32), by means of their suction effect, hold the sheet-shaped object (P) and entrain the same in the conveying direction of the conveying means (20), and wherein the suction elements (30, 32) release the object (P, S) when the suction effect is deactivated;
- the suction elements (30, 32) for holding the sheet-shaped object (P) are arranged in such a manner that in each case at least one suction element (30, 32) engages with the sheet-shaped object (P) between in each case two adjacent weakening regions (R);
- the installations (20, 30, 32) for severing in each case the frontmost part, in the conveying direction of the sheet-shaped object (P), which forms the strip-shaped or slab-shaped object sub-unit (S) from the sheet-shaped object (P) operate in such a manner that, on account of the revolving motion of the conveying means (20), a suction element (30, 32) which is assigned to said part is pivoted out of the conveying plane of the sheet-shaped object (P), on account of which said part of the sheet-shaped object (P), ahead of the in each case frontmost weakening region (R), is moved out of the conveying plane; and
- the conveying and separating device (10) is adapted such that the formed strip-shaped or slab-shaped object sub-unit (S) is deposited by the conveying and separating device (10) **in that** the suction effect of the suction element (30, 32) which is assigned to the severed object sub-unit (S) is deactivated.

9. The device as claimed in claim 8, **characterized in that** the suction elements (30, 32) for holding the sheet-shaped object (P) are arranged in such a manner that a plurality of suction elements (32) engage with the object (P) where said suction elements (32) are beside one another and perpendicular to the conveying direction of the conveying means (20) and in each case between two adjacent weakening regions (R) and substantially across the entire width of the sheet-shaped object (P).

10. The device as claimed in one of claims 8 or 9, **characterized in that** the provided sheet-shaped object (P) has a rectangular shape, wherein the weakening regions have a plurality of scores (R) or perforation lines which run parallel to one another and parallel to one of the edges and substantially across the entire width of the sheet-shaped object (P) in such a manner in the object (P) that an integer number of strip-shaped or slab-shaped object sub-units (S) can be formed from the sheet-shaped object (P).

11. The device as claimed in one of claims 8 to 10, **characterized in that** the devices (40, 50) for onward conveying of the strip-shaped or slab-shaped object sub-units (S) formed by the conveying and separating device (10) have an assembling installation (91) for the temporary storage, prior to further processing thereof, of a plurality of strip-shaped or slab-shaped object sub-units (S).

12. The device as claimed in claim 11, **characterized in that**, in the assembling installation (91), the strip-shaped or slab-shaped object sub-units (S) lie on top of one another in an aligned stack.

13. The device as claimed in one of claims 11 or 12, **characterized in that** the devices for onward conveying of the strip-shaped or slab-shaped object sub-units (S) formed by the conveying and separating device (10) have the following further features:
- sensor installations (70) which detect the properties, in particular the material consistency and/or the dimensions, of the formed strip-shaped or slab-shaped object sub-units (S) ;
- conveying installations (80) for discharging from the conveying process those object sub-units (S) of which the detected properties do not conform to predefined values, such that, in particular, those object sub-units (S) are not transferred to the assembling installation (91) and/or to further-processing installations subsequent to the latter; and
- controlling installations which are coupled to the sensor installations (70) and the discharge-conveying installations (80).

14. The device as claimed in one of claims 8 to 13, **characterized in that** the devices for providing the sheet-shaped objects (P), in the conveying direction ahead of the conveying and separating device (10), have installations (T) for providing the sheet-shaped objects (P) in the form of a stack of a plurality of identical sheet-shaped objects (P), wherein the conveying and separating device (10) receives the sheet-shaped objects (P) from the stack in each case individually, one after another.

15. The device as claimed in one of claims 8 to 14, **characterized in that** the sheet-shaped objects (P) and the strip-shaped or slab-shaped object sub-units (S) which are formed from the former are preliminary products or intermediate products of the foodstuff industry, in particular preliminary chewing-gum products or intermediate chewing-gum products.

16. The device as claimed in claim 15, **characterized in that** the sheet-shaped objects (P) are chewing-gum sheets and the strip-shaped or slab-shaped object sub-units (S) which are formed from the former are chewing-gum slabs, wherein individual strip-shaped chewing-gum portions which are destined for consumption are subsequently manufactured from the chewing-gum slabs (S), and wherein the individual strip-shaped chewing-gum portions are subsequently packed individually and/or in groups.

## Revendications

1. Procédé de séparation d'objets en forme de plaques (P) en des sous-unités d'objets en forme de bandes ou de plaques (S), avec les étapes suivantes :
- mise à disposition et convoyage des objets en forme de plaques (P), chaque objet en forme de plaque (P) présentant des zones d'affaiblissement (R), qui s'étendent perpendiculairement à la direction de convoyage des objets en forme de plaques (P) ;
- séparation de certaines sous-unités d'objets en forme de bandes ou de plaques (S), de manière successive, des objets en forme de plaques (P) mis à disposition, la séparation ayant lieu à l'aide d'un dispositif de convoyage et de séparation (10) au niveau des zones d'affaiblissement (R) des objets en forme de plaques (P) grâce au fait que le dispositif de convoyage et de séparation (10) reçoit successivement et individuellement les objets en forme de plaques (P) et les maintient par friction et par complémentarité de forme et les convoie dans le plan de leur extension et grâce au fait que la partie la plus en avant de l'objet en forme de plaque (P), dans la direction de convoyage de l'objet en forme de plaque (P), est séparée de l'objet en forme de plaque (P) au niveau de la zone d'affaiblissement (R) la plus en avant et la sous-unité d'objet en forme de bande ou de plaque (S) ainsi formée est déposée ; et
- convoyage des différentes sous-unités d'objets en forme de bandes ou de plaques (S) formées ;
**caractérisé en ce que** l'étape de séparation à l'aide du dispositif de convoyage et de séparation (10) comprend les étapes supplémentaires suivantes :
- réception, maintien et convoyage de l'objet en forme de plaque (P) à l'aide de l'action d'aspiration d'éléments d'aspiration (30, 32), qui sont disposés au niveau d'un moyen de convoyage (20) circulaire en forme de ruban, l'action d'aspiration des éléments d'aspiration (30, 32) pouvant être activée et désactivée et les éléments d'aspiration (30, 32) relâchant l'objet (P, S) lorsque l'action d'aspiration est désactivée ;
- maintien de l'objet en forme de plaque (P) par les éléments d'aspiration (30, 32) de façon à ce qu'au moins un élément d'aspiration (30, 32) s'emboîte entre deux zones d'affaiblissement (R) adjacentes avec l'objet en forme de plaque (P) ;
- séparation de la partie la plus en avant de l'objet en forme de plaque (P), formant la sous-unité d'objet en forme de bande ou en forme de plaque (S) de l'objet en forme de plaque (P) grâce au fait qu'un élément d'aspiration (30, 32) correspondant à cette partie est pivoté hors du plan de convoyage de l'objet en forme de plaque (P) du fait de la rotation du moyen de convoyage (20), cette partie de l'objet en forme de plaque (P) étant déplacée hors du plan de convoyage avant la zone d'affaiblissement (R) la plus en avant ; et
- dépose de la sous-unité d'objet en forme de bande ou de plaque (S) grâce au fait que l'action d'aspiration de l'élément d'aspiration (30, 32) correspondant à la sous-unité d'objet (S) séparée est désactivée.

2. Procédé selon la revendication 1, **caractérisé en ce que** l'objet en forme de plaque (P) présente une forme rectangulaire, les zones d'affaiblissement présentent plusieurs rainures (R) ou lignes de perforation dans l'objet (P), parallèles entre elles et parallèles à un des bords et s'étendant globalement sur toute la largeur de l'objet en forme de plaque (P), de façon à ce qu'un nombre entier de sous-unités d'objets en forme de bandes ou de plaques (S) puissent être formées à partir de l'objet en forme de plaque (P).

3. Procédé selon l'une des revendications 1 ou 2, **caractérisé en ce que** les sous-unités d'objets en forme de bandes ou de plaques (S) sont transférées par le dispositif de convoyage et de séparation (10) à un dispositif collecteur (91), dans lequel plusieurs sous-unités d'objets en forme de bandes ou de plaques (S) sont entreposées et à partir duquel elles sont prélevées pour un traitement ultérieur.

4. Procédé selon l'une des revendications précédentes, **caractérisé en ce que** les propriétés, plus particulièrement la nature du matériau et/ou les dimensions des sous-unités d'objets en forme de bandes ou de plaques (S) sont déterminées à l'aide de dispositifs à capteurs (70) et **en ce que** les sous-unités d'objets (S) dont les propriétés ne coïncident pas avec des valeurs prédéterminées, sont évacuées du processus de convoyage et plus particulièrement pas transférées au dispositif collecteur (91) et/ou aux dispositifs de traitement ultérieur.

5. Procédé selon l'une des revendications précédentes, **caractérisé en ce que** les objets en forme de plaques (P) sont mis en disposition dans la direction de convoyage avant le dispositif de convoyage et de séparation (10) sous la forme d'un empilement de plusieurs objets en forme de plaques (P) identiques et **en ce que** le dispositif de convoyage et de séparation (10) reçoit les objets en forme de plaques (P) successivement à partir de l'empilement.

6. Procédé selon l'une des revendications 1 à 5, **caractérisé en ce que** les objets en forme de plaques (P) et les sous-unités d'objets en forme de bandes ou de plaques (S) formées à partir de ceux-ci sont des avant-produits ou des produits intermédiaires de l'industrie alimentaire, plus particulièrement des avant-produits ou des produits intermédiaires de gomme à mâcher.

7. Procédé selon al revendication 6, **caractérisé en ce que** les objets en forme de plaques (P) sont des plaques de gommes à mâcher, ce qu'on appelle des « sheets » et les sous-unités d'objets en forme de bandes ou de plaques (S) formées à partir de ceux-ci sont des bandes de gomme à mâcher, ce qu'on appelle des « slabs », des portions individuelles de gomme à mâcher en forme de bandes destinées à la consommation étant ensuite fabriquées à partir des bandes de gomme à mâcher (S) et les portions individuelles de gomme à mâcher en forme de bandes étant ensuite emballées individuellement ou en groupe.

8. Dispositif pour la séparation d'objets en forme de plaques (P) en sous-unités d'objets en forme de bandes ou de plaques (S), avec les caractéristiques suivantes :
- des dispositifs (T) pour la mise à disposition des objets en forme de plaques (P), chaque objet en forme de plaque (P) mis à disposition présentant des zones d'affaiblissement (R), qui s'étendent perpendiculairement à une direction de convoyage des objets en forme de plaques (P) ;
- un dispositif de convoyage et de séparation (10) pour le convoyage des objets en forme de plaques (P) et pour la séparation de sous-unités d'objets en forme de bandes ou de plaques (S) de manière successive des objets en forme de plaques (P) mis à disposition, la séparation ayant lieu au niveau des zones d'affaiblissement (R) des objets en forme de plaques (P), le dispositif de convoyage et de séparation (10) présentant les caractéristiques suivantes :
- des dispositifs (30, 32) pour la réception et le maintien par friction et par complémentarité de forme des objets en forme de plaques (P) de manière successive au niveau du dispositif de convoyage et de séparation (10) ;
- des dispositifs (20) pour le convoyage des objets en forme de plaques (P) dans le plan de leur extension ;
- des dispositifs (20, 30, 32) pour la séparation de la partie la plus en avant de l'objet en forme de plaque (P), dans la direction de convoyage de l'objet en forme de plaque (P), de l'objet en forme de plaque (P) au niveau de la zone d'affaiblissement (R) la plus en avant et pour la dépose de la sous-unité d'objet en forme de bande ou de plaque (S) ; et
- des dispositifs (40, 50) pour le convoyage des différentes sous-unités d'objets en forme de bandes ou de plaques (S) ;
**caractérisé en ce que**
- le dispositif de convoyage et de séparation (10) comprend un moyen de convoyage (20) rotatif en forme de ruban, muni d'éléments d'aspiration (30, 32), l'action d'aspiration des éléments d'aspiration (30, 32) pouvant être activé et désactivé, les éléments d'aspiration (30, 32) maintenant l'objet en forme de plaque (P) à l'aide de leur action d'aspiration et l'entraînant dans la direction de convoyage du moyen de convoyage (20), et les éléments d'aspiration (30, 32) relâchant l'objet (P, S) lorsque l'action d'aspiration est désactivée ;
- les éléments d'aspiration (30, 32) sont conçus pour le maintien de l'objet en forme de plaque (P) de façon à ce qu'au moins un élément d'aspiration (30, 32) s'emboîte avec l'objet en forme de plaque (P) entre deux zones d'affaiblissement (R) adjacentes ;
- les dispositifs (20, 30, 32) permettent de séparer la partie la plus en avant dans la direction de convoyage de l'objet en forme de plaque (P), formant la sous-unité d'objet en forme de bande ou de plaque (S), de l'objet en forme de plaque (P), de façon à ce qu'un élément d'aspiration (30, 32) correspondant à cette partie soit pivoté hors du plan de convoyage de l'objet de convoyage (P) du fait de la rotation du moyen de convoyage (20), de façon à ce que cette partie de l'objet en forme de plaque (P) soit déplacée hors du plan de convoyage avant la zone d'affaiblissement (R) la plus en avant ; et
- le dispositif de convoyage et de séparation (10) est conçu de façon à ce que la sous-unité d'objet en forme de bande ou de plaque (S) formée soit déposée par le dispositif de convoyage et de séparation (10) grâce au fait que l'action d'aspiration de l'élément d'aspiration (30, 32) correspondant à la sous-unité d'objet (S) séparée est désactivée.

9. Dispositif selon la revendication 8, **caractérisé en ce que** les éléments d'aspiration (30, 32) sont conçus pour le maintien de l'objet en forme de plaque (P), de façon à ce que plusieurs éléments d'aspiration (32) s'emboîtent les uns à côtés des autres et perpendiculairement à la direction de convoyage du moyen de convoyage (20) entre deux zones d'affaiblissement (R) globalement sur toute la largeur de l'objet en forme de plaque (P) avec l'objet (P).

10. Dispositif selon l'une des revendications 8 ou 9, **caractérisé en ce que** l'objet en forme de plaque (P) mis à disposition présente une forme rectangulaire, les zones d'affaiblissement présentant des rainures (R) ou des lignes de perforation dans l'objet (P), parallèles entre elles et parallèles à un des bords et s'étendant globalement sur toute la largeur de l'objet en forme de plaque (P), de façon à ce qu'un nombre entier de sous-unités d'objet en forme de bandes ou de plaques (S) puissent être formées à partir de l'objet en forme de plaque (P).

11. Dispositif selon l'une des revendications 8 à 10, **caractérisé en ce que** les dispositifs (40, 50), pour le convoyage des sous-unités d'objets en forme de bandes ou de plaques (S) formées par le dispositif de convoyage et de séparation (10), présentent un dispositif collecteur (91) pour un entreposage de plusieurs sous-unités d'objets en forme de bandes ou de plaques (S) avant leur traitement ultérieur.

12. Dispositif selon la revendication 11, **caractérisé en ce que** les sous-unités d'objets en forme de bandes ou de plaques (S) sont superposées dans le dispositif collecteur (91) dans un empilement orienté.

13. Dispositif selon l'une des revendications 11 ou 12, **caractérisé en ce que** les dispositifs de convoyage des sous-unités d'objets en forme de bandes ou de plaques (S) formées par le dispositif de convoyage et de séparation (10) présentent les caractéristiques supplémentaires suivantes :
- des dispositifs à capteurs (70) qui déterminent les propriétés, plus particulièrement la nature du matériau et/ou les dimensions des sous-unités d'objets en forme de bandes ou de plaques (S) formées ;
- des dispositifs de convoyage (80) pour l'évacuation des sous-unités d'objets (S) dont les propriétés déterminées ne coïncident pas avec des valeurs prédéterminées, hors du processus de convoyage, de façon à ce que ces sous-unités d'objets (S) ne soient plus particulièrement pas transférées au dispositif collecteur (91) et/ou aux dispositifs de traitement ultérieur suivants ; et
- des dispositifs de commande qui sont couplés avec les dispositifs à capteurs (70) et les dispositifs de convoyage d'évacuation (80).

14. Dispositif selon l'une des revendications 8 à 13, **caractérisé en ce que** les dispositifs pour la mise à disposition des objets en forme de plaques (P) présentent, dans la direction de convoyage du dispositif de convoyage et de séparation (10), des dispositifs (T) pour la mise à disposition des objets en forme de plaques (P) sous la forme d'un empilement de plusieurs objets en forme de plaques (P) identiques, le dispositif de convoyage et de séparation (10) recevant les objets en forme de plaques (P) à partir de l'empilement de manière successive.

15. Dispositif selon l'une des revendications 8 à 14, **caractérisé en ce que** les objets en forme de plaques (P) et les sous-unités d'objets en forme de bandes ou de plaques (S) formées à partir de ceux-ci sont des avant-produits ou des produits intermédiaires de l'industrie alimentaire, plus particulièrement des avant-produits ou des produits intermédiaires de gomme à mâcher.

16. Dispositif selon la revendication 15, **caractérisé en ce que** les objets en forme de plaques (P) sont des plaques de gomme à mâcher, ce qu'on appelle des « sheets » et les sous-unités d'objets en forme de bandes ou de plaques (S) formées à partir de ceux-ci sont des bandes de gomme à mâcher, ce qu'on appelle des « slabs», des portions individuelles de gomme à mâcher en forme de bandes destinées à la consommation étant ensuite fabriquées à partir des bandes de gomme à mâcher (S) et les portions individuelles de gomme à mâcher en forme de bandes étant ensuite emballées individuellement ou en groupe.
